Europäisches Patentamt

European Patent Office

Office européen des brevets

(11) Numéro de publication: **0 364 317**
**A1**

## (12) DEMANDE DE BREVET EUROPEEN

(21) Numéro de dépôt: **89402563.4**

(22) Date de dépôt: **19.09.89**

(51) Int. Cl.5: **G02B 6/44**

(30) Priorité: **20.09.88 FR 8812267**

(43) Date de publication de la demande:
**18.04.90 Bulletin 90/16**

(84) Etats contractants désignés:
**AT BE CH DE ES GB IT LI NL SE**

(71) Demandeur: **SATCABLES Société en nom collectif**
**69/71 rue du Chevaleret**
**F-75013 Paris Cédex 08(FR)**

(72) Inventeur: **Roche, Gaston**
**36 Route de Marsat**
**F-63200 Riom(FR)**

(74) Mandataire: **Bloch, Gérard et al**
**2, square de l'Avenue du Bois**
**F-75116 Paris(FR)**

(54) **Câble a fibres optiques.**

(57) Le câble comporte des éléments de renfort (10-12) torsadés le long de lignes hélicoïdales de contact mutuel (20), une enveloppe extérieure enveloppant les éléments de renfort et ménageant des espaces hélicoïdaux de réception (2) délimités, chacun, par l'enveloppe extérieure, deux éléments de renfort adjacents (10;12) et leur ligne de contact (20). Les fibres optiques (3) s'étendent dans les espaces hélicoïdaux (2) et la longueur des fibres (3) est supérieure à celle des lignes de contact (20) délimitant leurs espaces de réception (2) pour présenter une surlongueur et autoriser des variations de longueur des éléments de renfort.

L'invention permet de fabriquer à bas coût des câbles à fibres optiques de faible encombrement.

FIG.4

## Câble à fibres optiques"

La présente invention concerne une structure de câble à fibres optiques répondant aux exigences de tenue mécanique, de fabrication automatisée et de coût réduit, imposées de façon de plus en plus drastique.

Il est possible de classer les structures actuelles des câbles à fibres optiques en deux grandes catégories en se référant à la nature de phénomènes induits dans les câbles. On trouve les structures dites "serrées", dans lesquelles la fibre est noyée dans une matière plastique dont le comportement a une influence sur le milieu de transmission, et les structures à "fibres libres", les plus couramment rencontrées, avec un support alvéolaire de caractéristiques bien déterminées.

Dans les structures "serrées", on trouve principalement deux types de câbles. Un premier type est composé d'un assemblage, par couches ou par groupes, de fibres renforcées par extrusion d'un ou plusieurs gainages. Un second type utilise des rubans de fibres les plus compacts possibles, qu'on assemble en une matrice qui est ensuite torsadée.

Dans les structures à "fibres libres", trois types ont été largement développés. Ils ont en commun l'utilisation de supports alvéolaires en matière plastique pour recevoir les fibres et un renforcement mécanique en traction -compression - écrasement, apporté par des porteurs métalliques ou en matériaux synthétiques semi-rigides ou souples, ou encore par une association de ceux-ci. Ces trois types sont abordés brièvement ci-après, mais pour plus de précisions, on se reportera utilement à la revue Commutation et Transmission 1982 No.2, 3 pages 39-54.

CABLE A STRUCTURE TUBES : Les fibres sont protégées, individuellement ou par groupe, par des tubes en matière thermoplastique extrudée sur la ou les fibres avec un jeu radial. Les tubes contenant les fibres sont assemblés en hélice autour d'un élément porteur central qui peut supporter à lui seul les efforts de traction ou aussi être aidé par une ceinture extérieure de fibres de verre ou aramide ou par une gaine métallique. l'ensemble est protégé par une gaine en matière plastique extrudée.

CABLE A RUBANS ALVEOLES : Les fibres sont placées dans les rainures de deux feuilles rainurées qui sont rapprochées et thermosoudées pour former des canaux dans lesquels les fibres ont une liberté de déplacement. Un empilage de rubans est réalisé et ensuite torsadé. Le tout est recouvert d'une gaine métallique et d'une gaine en matière plastique.

CABLE A JONC RAINURE : L'élément de câblage est constitué d'un jonc cylindrique rainuré, les fibres étant déposées dans les rainures. Le jonc est en matériau thermoplastique et se trouve renforcé par un porteur central assurant les qualités mécaniques et thermiques de l'ensemble. Ce porteur est le plus souvent en acier ou en matériau non métallique à fort module d'Young, tel qu'un composite verre/résine époxy durcissable. Plusieurs joncs peuvent être assemblés pour former un câble. L'ensemble est enrobé d'une protection extérieure pouvant être constituée d'une gaine métallique ou thermoplastique ou encore de l'association des deux avec éventuellement des renforts mécaniques.

Toutes ces structures nécessitent plusieurs opérations de fabrication et font intervenir des quantités appréciables de matériaux divers pour supporter les fibres et assurer leur tenue mécanique, ce qui rend les câbles terminés relativement coûteux et encombrants.

Si l'on considère la catégorie des structures à fibres libres, on constate que pour toutes les structures utilisées jusqu'à présent, les espaces libres, dans lesquels s'étendent les fibres, sont délimités par des matériaux plastiques qui servent de supports. Cela conduit à mettre en oeuvre dans un câble des quantités proportionnellement importantes de matières plastiques dont on sait qu'elles ont des comportements mécanique et thermique très éloignés de ceux de la fibre optique. Leur module d'Young est très faible et leur coefficient de dilatation linéaire est supérieur d'un ordre de grandeur de $10^1$ à $10^2$ à celui du verre.

Pour compenser l'insuffisance mécanique du support plastique des fibres de ces structures classiques et l'action défavorable de leurs variations linéaires importantes par rapport à celle de la fibre optique au cours, par exemple, des changements de température, il est nécessaire d'utiliser des renforts mécaniques à haut module d'Young et à plus faible coefficient de dilatation linéaire. Ceux-ci apportent la tenue mécanique en traction et compression et doivent s'opposer aux variations linéaires excessives du module plastique. Dans ces conditions, plus la section du matériau plastique sera élevée, plus il sera nécessaire d'augmenter la section du renfort mécanique, ce qui agit défavorablement sur le prix de revient du câble.

La présente invention vise à réaliser un câble à fibres optiques du type à structure libre mais ne présentant pas les inconvénients des structures précitées.

Tout en conservant les avantages d'une structure à fibres libres, l'invention vise à résoudre ce problème de contraintes linéaires et à réaliser un câble optique en une seule opération de fabrication pour en diminuer le prix.

L'invention vise également à réaliser un câble optique de section et de poids réduits, ce qui va aussi dans un sens de réduction du coût du câble.

Le câble optique de l'invention procure en outre aux fibres optiques une excellente protection contre l'écrasement.

En outre, le câble optique de l'invention permet, à la fabrication, de positionner correctement les fibres dans les emplacements qui leur sont réservés avec beaucoup de facilité.

On connaît déjà, par le document US-A-4 166 670, un câble à au moins une fibre optique comportant des éléments de renfort torsadés le long de lignes hélicoïdales de contact mutuel, une enveloppe extérieure enveloppant les éléments de renfort et ménageant des espaces hélicoïdaux de réception délimités, chacun, par l'enveloppe extérieure, deux éléments de renfort adjacents et leur ligne de contact.

Toutefois, les fibres optiques du câble de ce document ne présentent pas de surlongueur et pour cause, puisque l'espace central ménagé entre les trois éléments porteurs de ce câble reçoit une fibre et que cet espace ne peut pas être hélicoïdal et par conséquent constituer un espace de liberté permettant à la fibre d'être insensible aux variations de longueur des éléments de renfort, variations subies, par exemple, au cours des cycles thermiques.

La présente invention vise donc à perfectionner le câble du document US-A-4 166 670.

A cet effet, la présente invention concerne un câble du type défini ci-dessus, caractérisé par le fait que la fibre s'étend dans l'un desdits espaces hélicoïdaux et la longueur de la fibre est supérieure à celle de la ligne de contact délimitant son espace de réception pour présenter un surlongueur et permettre des variations de longueur des éléments de renfort.

Dans une forme de réalisation intéressante du câble de l'invention, les éléments de renfort sont cylindriques.

Les éléments de renfort peuvent être recouverts d'un film souple.

L'invention concerne également le procédé de fabrication du câble de l'invention, caractérisé par le fait que les éléments de renfort et la fibre sont torsadés em même temps dans une filière unique.

Avantageusement, il est appliqué aux éléments de renfort une force d'allongement entre des tourets dévidant ces éléments de renfort et un cabestan, de préférence en aval d'une boudineuse d'extrusion de l'enveloppe extérieure.

L'invention sera mieux comprise à l'aide de la description qui suit, en référence aux dessins annexés, sur lesquels

- les figures 1a, 1b, 1c, 1d représentent schématiquement différents exemples de module optique par câble à fibres optiques suivant l'invention ;
- la figure 2 représente une variante de la forme de réalisation de la figure 1b ;
- la figure 3 représente une autre variante de la forme de réalisation de la figure 1b ;
- la figure 4 représente un câble optique terminé, formé d'un seul module selon la forme de réalisation de la figure 1b, et
- les figures 5a, 5b, 5c illustrent trois modes de mise en oeuvre du procédé selon l'invention pour fabriquer les câbles optiques selon les figures 1, 2, 3.

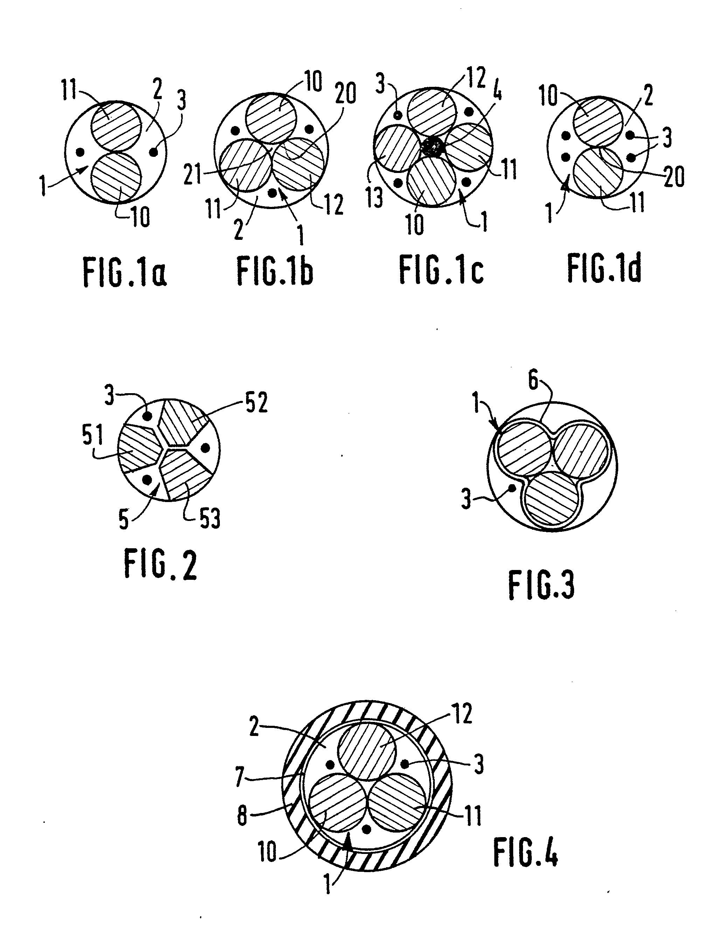

En se référant à la figure 1, l'invention consiste essentiellement à réaliser un module composite constitué de brins porteurs, ou de renfort, et de fibres optiques intercalées entre les brins porteurs. L'ensemble des éléments, brins porteurs et fibres optiques, est câblé en hélice continue ou à sens alterné. La figure 1b illustre un cas particulier pour lequel trois brins (10,11,12) sont torsadés pour constituer l'élément porteur 1. La figure 1a illustre un cas à deux brins porteurs (10,11) torsadés également. La figure 1c illustre un module comportant un élément porteur 1 constitué de quatre brins (10,11,12,13) torsadés. On pourrait augmenter le nombre de brins, mais l'élément porteur 1 perdrait de la souplesse ; on adopte avantageusement un nombre compris entre 2 et 5 brins porteurs. Ainsi qu'illustré sur la figure 1b, les brins porteurs (10,11,12) ont une section circulaire, de telle sorte que deux brins adjacents délimitent un canal 2, qui est un espace hélicoïdal délimité en outre par la ligne hélicoïdale de contact mutuel 20 dans deux brins 10,12 considérés et, comme on le verra plus loin, par une enveloppe extérieure enveloppant les brins porteurs, le canal 2 servant d'espace de réception et de liberté pour au moins une fibre optique 3 dont la longueur est supérieure à celle de la ligne de contact délimitant le canal. La figure 1d représente un toron formé d'un élément porteur 1 à deux brins (10,11) torsadés en hélice, chaque canal 2 recevant deux fibres optiques 3. On notera ici que la ligne de contact mutuel 20 est unique et s'étend autour de l'axe de symétrie du toron et du câble, ce dernier étant ici cylindrique. Le câble des lignes 1b, 1c comportent trois ou quatre porteurs (10-13) en contact deux à deux et ménageant un espace intérieur 21 sans fibre.

L'ensemble des éléments, porteurs (10,11,12) et fibres optiques 3, est câblé en hélice continue ou à sens alterné. Le pas de l'hélice est déterminé pour obtenir la surlongueur de fibre 3 nécessaire pour supporter les contraintes mécaniques et thermiques auxquelles le câble sera soumis et donc permettre ainsi des variations de longueur des brins porteurs, compte tenu de la dimension du canal 2 ménagé entre les brins porteurs (10,11,12,13,...).

La dimension des brins porteurs (10,11,12,13,...) est également déterminée en tenant compte des contraintes mécaniques supportées par le câble et de l'espace libre nécessaire pour éviter toute contrainte sur la fibre 3 après sa mise en place. Les brins porteurs (10,11,12,13) sont en matériaux métalliques ou non métalliques, à haut module d'Young et à faible coefficient de dilatation linéaire par rapport aux matériaux thermoplastiques. Les brins porteurs (10,11,12,13) sont avantageusement réalisés en acier ou en composite verre/résine durcissable ou encore en composition fibre de carbone/résine durcissable. Comme résines durcissables, on peut considérer en particulier les résines epoxy, le polyester, etc...

Comme on peut l'observer, le toron 1 supportant les fibres optiques 3 n'est constitué que par des brins porteurs (10,11,12), en ne faisant appel à aucun matériau thermoplastique, ce qui supprime les inconvénients apportés par l'emploi de ceux-ci comme déjà rappelés ci-avant.

La surlongueur nécessaire aux fibres optiques 3, pour supporter sans contrainte les efforts de traction et de compression auxquels le câble sera soumis pendant son utilisation, est assurée au moment de la réalisation du toron en appliquant sur les brins porteurs (10,11,12,13,...) la force nécessaire pour obtenir l'allongement recherché ainsi qu'il apparaitra dans la suite de la description.

Dans certains cas, pour supporter des conditions d'étanchéité longitudinale du câble ou de stabilisé du toron de brins porteurs, il peut être nécessaire de prévoir un bourrage 4 au centre de la torsade, comme représenté figure 1c.

En référence à la figure 2, le module optique est formé d'un élément porteur 5 constitué de brins (51,52,53) torsadés en hélice et de fibres optiques 3. Les brins (51,52,53), constituant l'élément porteur 5, présentent toutefois une section de forme polygonale choisie pour obtenir un appui très stable entre brins et donnant une forme triangulaire simple au canal formé entre brins adjacents. Dans ce cas, le contact des brins deux à deux ne s'effectue pas à proprement parler par une ligne mais par un plan. On continuera toutefois d'appeler ligne de contact, celle de ce plan qui délimite le canal de réception de fibre.

Il peut être intéressant, comme représenté sur la figure 3, de recouvrir d'un film plastique 6 de très faible épaisseur, de l'ordre de quelques dizièmes de millimètres, la surface extérieure du toron 1 de brins porteurs (10,11,12) pour maintenir les fibres 3 au dessus de la ligne ici de tangence des brins porteurs (10,11,12), afin d'éviter qu'elles ne se coincent entre ceux-ci.

Il serait également possible d'insérer, dans les canaux 2 des brins porteurs (1,5), des fibres optiques 3 placées dans des tubes ou gaines en matière plastique, quoique cette réalisation fasse partiellement perdre les avantages présentés par l'invention.

La figure 4 représente une vue en coupe d'un câble terminé, composé de trois brins porteurs (10,11,12) supportant trois fibres optiques 3. L'étanchéité longitudinale est assurée par une matière graisseuse remplissant les espaces 2 laissés libres. La protection extérieure est constituée d'un ruban en polyester 7 et d'une gaine en matière plastique 8. Un câble, avec la structure représentée sur la figure 4, possédant trois fibres optiques 3 et pouvant supporter un effort de traction de 220 daN et des pliages sur un rayon de 50 mm, a une diamètre extérieur de l'ordre de 5mm avec une gaine de protection extérieure d'épaisseur 0,8 mm. Avec une gaine de protection de même épaisseur, un câble classique à jonc rainuré, de mêmes performances, a un diamètre extérieur voisin de 7 mm, ce qui lui donne une section droite environ deux fois plus élevée que celle du câble selon l'invention.

Toutefois, un câble optique selon l'invention peut encore être formé d'un assemblage de modules optiques selon l'une des variantes des figures 1 à 3, chaque module étant recouvert avantageusement d'un ruban en polyester 7 ou d'une gaine en matière plastique ou encore de l'association des deux, chaque module comportant un nombre approprié de fibres optiques, l'ensemble étant recouvert d'une gaine extérieure de protection en matière plastique.

Compte tenu de la bonne tenue mécanique de chacun de ces modules, il n'est pas indispensable d'ajouter au câble optique ainsi formé un renfort mécanique supplémentaire.

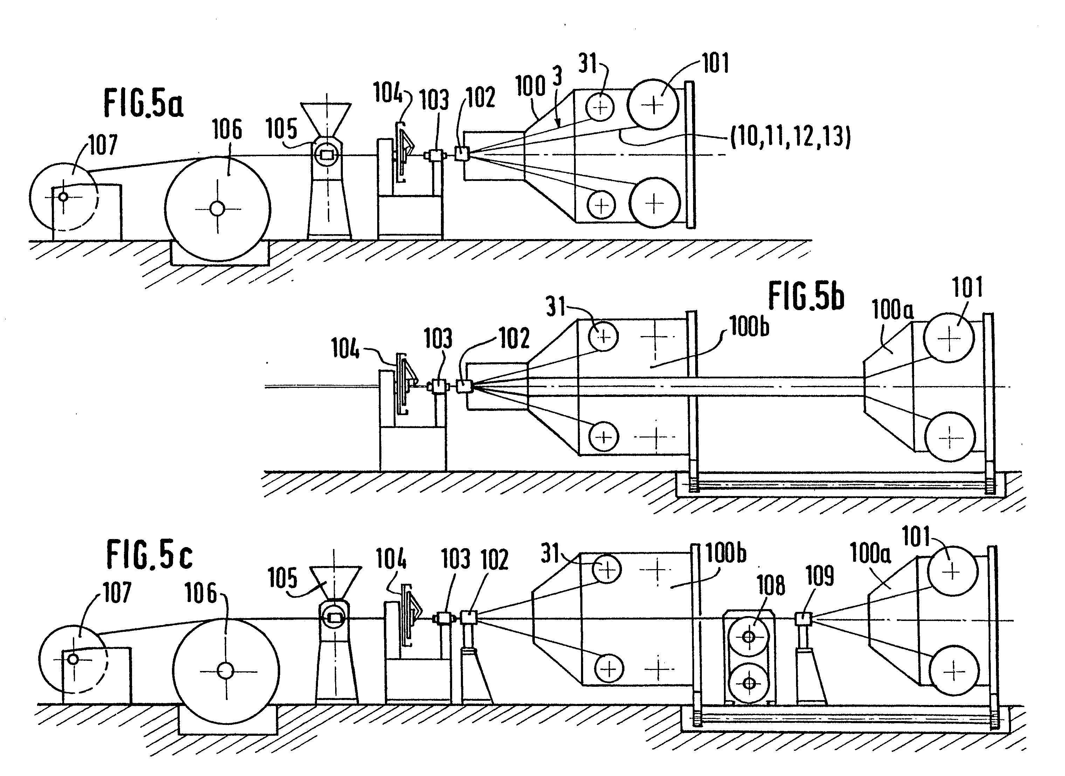

Les figures 5a, 5b et 5c représentent schématiquement trois formes de réalisation différentes d'équipements permettant d'obtenir la surlongueur recherchée pour les fibres optiques sur une ligne de fabrication suivant l'invention.

La ligne de fabrication de la figure 5a comporte une seule cage tournante 100 portant des bobines 101 sur lesquelles sont enroulés les brins porteurs (10,11,12,13) et des bobines 31 sur lesquelles sont enroulées les fibres optiques 3. La force appliquée sur chacun des brins porteurs (10,11,12,13) permet d'obtenir l'allongement recherché du toron porteur entre la cage 100 et un cabestan de tirage 106, ici à vitesse tangentielle de rotation différente de celle des bobines 101, afin de donner aux fibres optiques 3 la surlongueur nécessaire lorsque le toron se trouve détendu après son passage sur le cabestan 106.

Les fibres optiques sont câblées et torsadés en même temps que les brins porteurs, avec une tension très faible, de l'ordre de 50 grammes, en passant dans la même filière tournante 102 que celle assurant le câblage des torons porteurs (10,11,12). Une volette de rubanage 104 permet la pose en hélice d'un ruban 7 autour du module optique ainsi constitué. Une boudineuse 105 assure l'extrusion d'une gaine extérieure 8. Un dispositif 103 d'injection de matière graisseuse de remplissage permet d'assurer l'étanchéité longitudinale du câble si nécessaire. Le dispositif d'injection 103 est placé entre le point de commettage de la filière 102 et la volette de rubanage 104. Le câble optique ainsi fabriqué est enroulé sur un touret 107 à la suite d'une seule opération. Le toron porteur (1,5) est fabriqué en même temps que le câble optique proprement dit.

Dans la forme de réalisation de la figure 5b, variante de celle de la figure 5a, il n'y a plus une cage tournante unique, mais deux cages séparées 100a et 100b tournant de façon synchrone. La cage 100a porte les brins porteurs (10,11,12,13,51,52,53) et la cage 100b les fibres optiques 3. La ligne de fabrication, à cette différence près, est identique à celle de la figure 5a.

Avec la forme de réalisation de la figure 5b, la surlongueur des fibres optiques 3 est obtenue en appliquant sur le touret 101 supportant les brins porteurs (10,11,12,13,51,52) un effort vers l'arrière comme précédemment.

Dans la forme de réalisation de la figure 5c, la ligne de fabrication comporte les cages tournantes (100a, 100b) des brins porteurs (10,11,12,13,51,52,53) et des fibres optiques 3, respectivement, qui sont aussi synchrones. Le reste de la ligne est quasiment identique à celui de la ligne de la figure 5a. Toutefois, on intercale entre ces deux cages 100a et 100b un cabestan donneur 108. Ce cabestan 108 reçoit le toron porteur (1,5) issu d'un point de commettage 109. Ce point de commettage 109 reçoit les brins porteurs (10,11,12,13,51,52,53) issus des tourets 101 et entraînés par la cage tournante 100a.

La force appliquée sur le toron porteur (1,5) est rigoureusement régulée et contrôlée entre les deux cabestans 108 et 106, qui coopèrent entre eux pour appliquer la force d'allongement et obtenir avec précision la surlongueur souhaitée pour les fibres optiques 3.

Le câble optique est enroulé de la même façon que sur les autres lignes, sur le touret 107.

Un avantage important procuré par un câble à fibres optiques ainsi réalisé est d'assurer une excellente protection des fibres contre l'écrasement. Celles-ci sont protégées directement par les brins porteurs, massifs et durs, ce qui confère au câble optique une très bonne tenue à l'écrasement.

Il faut aussi mentionner un avantage supplémentaire au plan de la fabrication du câble, qui s'effectue avec une plus grande facilité de positionnement correct des fibres dans les espaces qui leur sont réservés. En effet, les opérations de pose des porteurs et des fibres optiques se faisant simultanément sur la même ligne de fabrication, il est très facile d'assurer une parfaite synchronisation du câblage des brins porteurs et des fibres optiques.

L'invention est particulièrement bien adaptée à une fabrication économique de câbles contenant un nombre réduit de fibres optiques, inférieur à la dizaine, sans pour autant que cette valeur ne soit limitative de l'invention. En effet, pour un câble optique d'une structure déterminée, l'importance relative, dans le coût du câble, des matériaux auxiliaires utilisés (modules plastiques et porteurs) est d'autant plus grande que le nombre de fibres optiques que contient le câble est faible si on considère le prix par unité de longueur de fibre installée. Il en est de même pour les temps de fabrication. C'est donc avec les câbles contenant les plus faibles quantités de fibres optiques que se feront le plus sentir les gains de matériaux auxiliaires et de temps de fabrication qu'apporte la structure selon l'invention.

Pour obtenir un câble optique contenant un nombre élevé de fibres optiques et conserver ces avantages de coût et de qualités mécaniques, il est possible de procéder à un assemblage de plusieurs modules optiques tels que décrits en référence aux figures 1 à 3. La bonne tenue mécanique de chacun des modules optiques permet généralement d'éviter l'utilisation d'un renfort mécanique supplémentaire, une simple gaine extérieure suffisant.

Il est bien évident que toutes sortes de protections extérieures peuvent venir compléter la gaine en matière plastique enveloppant le module optique sans pour autant sortir du cadre de l'invention. Il en est ainsi lorsque des renforts mécaniques supplémentaires sont disposés en périphérie du câble pour améliorer une tenue à un effort de traction par exemple.

## Revendications

1. Câble à au moins une fibre optique (3), comportant des éléments de renfort (10-13;51-53) torsadés le long de lignes hélicoïdales de contact mutuel (20), une enveloppe extérieure (7,8) enveloppant les éléments de renfort et ménageant des espaces hélicoïdaux de réception (2) délimités, chacun, par l'enveloppe extérieure, deux éléments de renfort adjacents (10,12) et leur ligne de contact (20), caractérisé par le fait que la fibre (3) s'étend dans l'un desdits espaces hélicoïdaux (2) et la longueur de la fibre (3) est supérieure à celle de la ligne de contact (20) délimitant son espace de réception pour présenter une surlongueur et permettre des variations de longueur des éléments de renfort.

2. Câble selon la revendication 1, dans lequel sont prévus deux éléments de renfort (10,11) torsadés le long d'une ligne hélicoïdale de contact (20) s'étendant autour d'un axe de symétrie du câble.

3. Câble selon la revendication 1, dans lequel sont prévus au moins trois éléments de renfort (10-12) en contact deux à deux et ménageant un espace intérieur (21) sans fibre.

4. Câble selon l'une des revendications 1 à 3, dans lequel le matériau des éléments de renfort (10-12;51-53) est choisi dans le groupe suivant : acier, composite fibres de verre/résine durcissable, fibre de carbone/résine durcissable, et autres matériaux analogues.

5. Câble selon l'une des revendications 1 à 4, dans lequel les éléments de renfort (10-13) ont une section circulaire délimitant un espace de liberté (2) à contour curviligne.

6. Câble selon l'une des revendications 1 à 4, dans lequel les éléments de renfort (51-53) ont une section polygonale.

7. Câble selon l'une des revendications 1 à 6, dans lequel les fibres optiques (3) sont noyées dans une matière graisseuse de remplissage.

8. Câble selon l'une des revendications 1 à 7, dans lequel la face extérieure de la torsade formée desdits éléments de renfort (10-12) est recouverte d'un film (6) en matériau souple de très faible épaisseur.

9. Câble optique selon l'une des revendications 1 à 8, dans lequel est prévu un ruban hélicoïdal (7) autour desdits éléments de renfort (10-13;51-53) et des fibres optiques (3).

10. Câble selon l'une des revendications 1 à 9, dans lequel les fibres optiques (3) sont placées dans des tubes souples de très faible section par rapport au diamètre desdits éléments de renfort (10-13;51-53).

11. Procédé de fabrication d'un câble selon l'une des revendications 1 à 10, caractérisé par le fait que les éléments de renfort (10-13;51-53) et les fibres (3) sont torsadés en même temps dans une filière unique (102).

12. Procédé selon la revendication 11, dans lequel il est appliqué aux éléments de renfort (10-13;51-53) une force d'allongement entre des tourets (101) dévidant ces éléments de renfort et un cabestan (106).

13. Procédé selon l'une des revendications 11 et 12, dans lequel on entoure les éléments porteurs et les fibres d'un ruban placé en hélice au moyen d'une volette de rubanage (104) puis d'une gaine extérieure (8) au moyen d'une boudineuse (105).

14. Procédé selon la revendication 13, dans lequel le cabestan (106) est placé en aval de ladite boudineuse (105).

15. Procédé selon l'une des revendications 12 à 14, dans lequel les tourets (101) dévidant les éléments de renfort (10-13) et des tourets (31) dévidant les fibres optiques (3) sont entraînés en rotation au moyen d'une même cage tournante (100).

16. Procédé selon l'une des revendications 12 à 15, dans lequel les tourets (101) dévidant les éléments de renfort (10-13) et des tourets (31) dévidant les fibres optiques (3) sont entraînés au moyen de deux cages tournantes (100ₐ, 100ᵦ) synchrones, respectivement.

17. Procédé selon la revendication 16, dans lequel entre lesdites cages tournantes (100ₐ, 100ᵦ), est placé un cabestan donneur (108) recevant lesdits éléments de renfort (10-13) toronnés au moyen d'une filière (109), ledit cabestan (108) coopérant avec ledit cabestan (106) pour appliquer ladite force d'allongement.

FIG.1a  FIG.1b  FIG.1c  FIG.1d

FIG.2

FIG.3

FIG.4

FIG.5a

107 106 105 104 103 102 100 3 31 101

(10,11,12,13)

FIG.5b

31 104 103 102 100b 100a 101

FIG.5c

107 106 105 104 103 102 31 100b 108 109 100a 101

EP 0 364 317 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | US-A-4 166 670  (M.M.RAMSAY)<br>* colonne 1, ligne 45 - colonne 2, ligne 34; figure 3 *<br>--- | 1, 3-5, 7-9 | G 02 B    6/44 |
| A | PATENT ABSTRACTS OF JAPAN vol. 9, no. 285 (P-404)(2008) 12 novembre 1985, & JP-A-60 126609 (NIPPON DENSHIN DENWA KOSHA)<br>* le document en entier *<br>--- | 1 | |
| A | GB-A-2 185 334  (BICC PUBLC LIMITED COMPANY)<br>* page 1, ligne 126 - page 2, ligne 20; figure 2 *<br>--- | 4, 6 | |
| A | GB-A-2 064 811  (G.LE NOANE ET AL.)<br>* figures 5-6 *<br>--- | 6, 7 | |
| A | DE-A-2 832 441  (SUMITOMO ELECTRIC INDUSRIES LTD)<br>* page 22, dernier alinéa - page 23, alinéa 1 *<br>--- | 11 | DOMAINES TECHNIQUES RECHERCHES (Int. Cl.5) |
| A | DE-A-2 519 050  (AEG-TELEFUNKEN KABELWERKE AG)<br>* revendication 1 *<br>----- | 12 | G 02 B    6/44 |

Le présent rapport a été établi pour toutes les revendications

| Lieu de la recherche | Date d'achèvement de la recherche | Examinateur |
|---|---|---|
| BERLIN | 03-11-1989 | FUCHS R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)